## Europäisches Patentamt

## European Patent Office

## Office européen des brevets

(11) Veröffentlichungsnummer: **0 154 014**
**B1**

(12) # EUROPÄISCHE PATENTSCHRIFT

(45) Veröffentlichungstag der Patentschrift:
20.07.88

(51) Int. Cl.⁴: **A 01 D 23/02,** A 01 D 27/00, A 01 D 33/00

(21) Anmeldenummer: **84115296.0**

(22) Anmeldetag: **12.12.84**

(54) **Rübenroder mit auf- und abschwingendem Tastrad und hydraulischem Antrieb dieses Tastrades.**

(30) Priorität: **04.02.84 DE 8403311 U**

(43) Veröffentlichungstag der Anmeldung:
**11.09.85 Patentblatt 85/37**

(45) Bekanntmachung des Hinweises auf die Patenterteilung:
**20.07.88 Patentblatt 88/29**

(84) Benannte Vertragsstaaten:
**BE CH DE FR IT LI NL**

(56) Entgegenhaltungen:
**DE-A-2 137 414**
**DE-B-2 250 913**

(73) Patentinhaber: **SCHMOTZER AGRARTECHNIC GmbH, Rothenburger Strasse 45, D-8532 Bad Windsheim (DE)**

(72) Erfinder: **Wilzin, Werner, Bauhofwall 8, D-8532 Bad Windsheim (DE)**

(74) Vertreter: **Richter, Bernhard, Dipl.- Ing., Beethovenstrasse 10, D-8500 Nürnberg 20 (DE)**

## Beschreibung

Die Erfindung betrifft einen Rübenroder gemäß dem Oberbegriff des Anspruches 1. Solche Rübenerntemaschinen können ein- und mehrreihig sein. Die dabei vorgesehene Voreilung des Tastrades gegenüber der Laufgeschwindigkeit des Roders selber kann z. B. 25 bis 30 % der Rodergeschwindigkeit betragen. Die hydrostatische Lenkeinheit wird vom Roder, z. B. dessen Laufrad, angetrieben und versorgt u. a. die übrigen, hydraulisch betätigten Vorrichtungen des Roders. Ein Teil des an der Lenkeinheit erzeugten Hydraulikstromes fließt über eine Zulauf- und eine Rücklaufleitung von der hydrostatischen Lenkeinheit zum Antriebsmotor des Tastrades, bzw. in umgekehrter Richtung zurück. Eine solche Anordnung ist z. B. aus DE-A-2 137 414 bekannt. Die genannte Voreilung des Tastrades bewirkt einen Halt der Rübe durch das Tastrad während des Köpfens durch das Köpfmesser, so daß das Köpfmesser die Rübe nicht während des Köpfvorganges umwerfen oder schrägstellen kann. Dies hätte nämlich zur Folge, daß die Rübe nicht oder nicht in der gewünschten Weise geköpft wird. Nachteilig ist nun da das Tastrad auf die Rübe bzw. das Rübenkraut aufsteigt und danach wieder absteigt - daß in den Zulauf- und Rücklaufleitungen Pulsierungen des Hydraulikstromes (Ölstromes) und damit ein Druckaufbau sowie Druckabbau entstehen. Dies hat, insbesondere bei einreihigen Rübenrodern, Schwankungen der Drehzahl, d.h. Schwankungen des Gleichlaufes des Tastrades bzw. der Tasträder zur Folge. Dies ist unerwünscht, da sich hierdurch Unregelmäßigkeiten beim Köpfen bzw. am Köpfschnitt ergeben. Wird die Voreilung des Tastrades unterschritten, so können durch das Köpfen Brüche in der Rübenwurzel entstehen.

Der Erfindung liegt die Aufgabe zugrunde, einen Rübenroder gemäß dem Oberbegriff des Anspruches 1 dahingehend zu verbessern, daß auch beim Auf- und Absteigen des Tastrades dessen Laufgeschwindigkeit in etwa konstant bleibt, d.h. zumindest im wesentlichen frei von Pulsierungen ist.

Der Lösung dieser Aufgabe dienen, ausgehend vom Oberbegriff des Anspruches 1, die Merkmale des Kennzeichens des Anspruches 1. Ein solches Dämpfungsventil, das auch Lasthalteventil genannt wird, gleicht ein Pulsieren des Hydraulikölstromes in den Zulauf- und Rücklaufleitungen beim Auf- und Absteigen des Tastrades aus, egalisiert also diese Pulsierungen. Die unerwünschten Drehzahländerungen des Tastrades aufgrund dessen Auf- und Absteigen sind damit vermieden, zumindest weitgehend gemindert. Da somit der Hydraulikstrom im wesentlichen konstant gehalten wird, hat dies eine entsprechende Konstanthaltung der Laufgeschwindigkeit des Tastrades und damit die Lösung der gestellten Aufgabe zur Folge.

Die Merkmale des Anspruches 2 beinhalten eine einfache Möglichkeit der Beaufschlagung des Dämpfungsventiles mit dem Aufsteuerdruck, ohne daß in den Verlauf der Zulaufleitung eingegriffen werden muß.

Eine bevorzugte Ausführungsform der Erfindung ist Inhalt des Anspruches 3. Ein solches Dämpfungsventil ist einerseits robust und störunanfällig und andererseits empfindlich genug, um auf entsprechende Druckschwankungen in den Hydraulikleitungen hinreichend rasch und genau zu reagieren.

Die Merkmale der Ansprüche 4 bis 6 dienen der weiteren Ausgestaltung und Funktion des Dämpfungsventiles.

Weitere Einzelheiten der Erfindung sind der nachfolgenden Beschreibung und der zugehörigen Zeichnung eines erfindungsgemäßen Ausführungsbeispieles zu entnehmen. In der Zeichnung zeigt:

Fig. 1: einen Rübenroder nach der Erfindung,

Fig. 2: rein schematisch die hier besonders interessierenden Bauteile des Rüben roders,

Fig. 3: in vergrößertem Maßstab ein in Fig. 2 nur angedeutetes Bremsventil.

Der Rübenroder besitzt ein Laufrad 1, das, z. B. über Zahnräder 2, eine hydrostatische Lenkeinheit 3 antreibt. Der hier interessierende Teil des Hydraulikölstromes fließt über die Zulaufleitung 4 zum Antriebsmotor 5 des Tastrades 6. Die hydraulische Rücklaufleitung 7 führt über das noch näher zu erläuternde Bremsventil 8 und die weitere Rücklaufleitung 9 zum Behälter 10 (Öltank) des hydraulischen Mittels und von da über die Leitung 11 zur hydrostatischen Lenkeinheit.

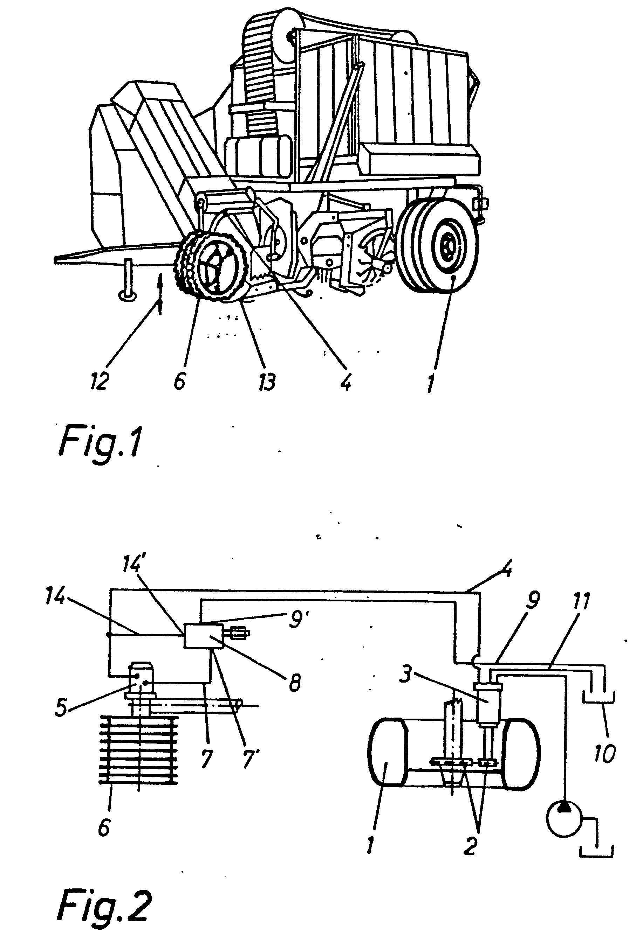

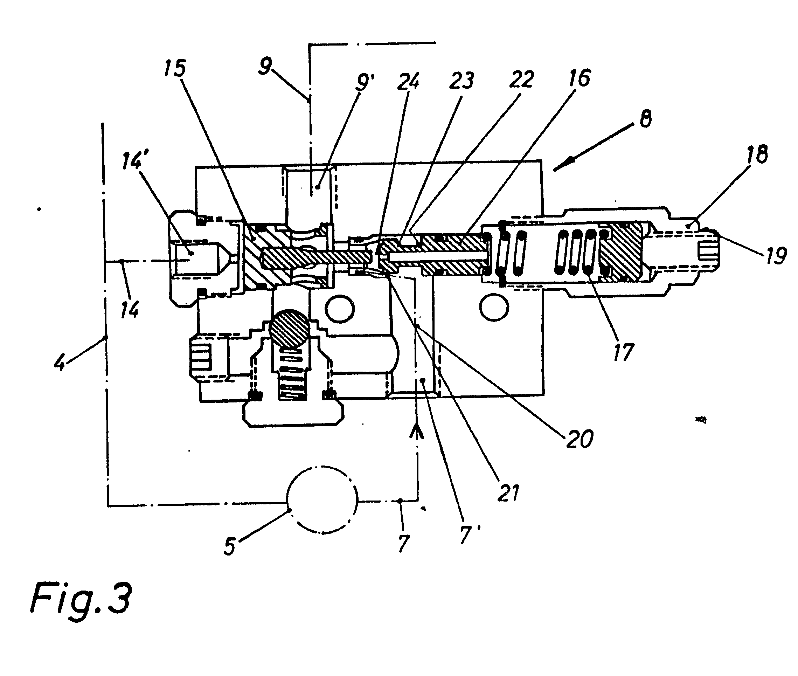

In Fig. 1 ist durch den vertikalen Doppelpfeil 12 angedeutet, wie das Tastrad sich beim Aufsteigen und Absteigen auf bzw. von einer in der Zeichnung nicht dargestellten Rübe nach oben und unten pendelnd bewegt. Außerdem ist das Köpfmesser 13 angedeutet. Das vorgenannte Pendeln erzeugt in den o.g. Hydraulikleitungen 4, 7, 9 (von denen in Fig. 1 nur das Leitungsstück 4 erkennbar ist) Unter- bzw. Überdrücke. Zu deren Ausgleich dient das Dämpfungsventil 8, das nachstehend anhand der Fig. 3 in seinem Aufbau und seiner Funktion näher beschrieben wird. Das Dämpfungsventil 8 ist bevorzugt auf den Antriebsmotor 5 direkt aufgeflanscht oder in Motornähe vorgesehen, um auch hier eine Pulsierung zu vermeiden (im einzelnen nicht dargestellt).

Der strichpunktiert dargestellte Durchfluß 20 des Öles durch das Dämpfungsventil erstreckt sich zwischen dessen Einlaß- bzw. Auslaßöffnungen 7' und 9'. Dabei ist das Dämpfungsventil 8 mit der Öffnung 9' an die zum Öltank 10 führende Rücklaufleitung 9 und mit der Öffnung 7' an die vom Motor 5 herkommende Rücklaufleitung 7 angeschlossen. 14' ist die Anschlußöffnung für eine Abzweigleitung 14, die von der Zulaufleitung 4 hervor deren Eingang in den Motor 5 abzweigt und damit verbunden ist, d.h. den Innendruck und damit den Aufsteuerdruck der Zulaufleitung 4 bei 14' dem Dämpfungsventil zuführt. Der Öldruck in der Leitung 14 wirkt dabei auf einen Steuerkolben 15 des Dämpfungsventiles und drückt ihn in der Zeichnung gemäß Fig. 3 nach rechts. Hiermit wird ein entsprechender Druck auf einen Regulierungskolben 16 des Dämpfungsventiles ausgeübt und zwar gegen Wirkung einer Druckfeder 17, die sich zwischen dem in Fig. 3 rechts gelegenen Ende des Regulierungskolbens 16 und einem gehäusefesten Widerlager 18 des Dämpfungsventiles abstützt. Über ein Schraubgewinde 19 ist die Vorspannung der Feder 17 einstellbar. Der Motor 5 und die Leitungen 4, 7, 9 und 14 sind strichpunktiert in Fig. 3 eingezeichnet. Die Kolben 15, 16 befinden sich in der Lage der Teile des Dämpfungsventiles gemäß Fig. 3 in einer Position, in der der ebenfalls strichpunktiert dargestellte Durchfluß 20 des Ölstromes bei 21 durch den linken Teil des Kolbens 16 unterbrochen ist. Dies ist eine Position, in der der Aufsteuerdruck in der Leitung 14 gegenüber dem normalen Betriebsdruck des Öles abgefallen, u. U. sogar auf Null zurückgegangen ist. Liegt jedoch der normale Ölbetriebsdruck in der Zuleitung 4 vor, so bewirkt der Druck in der Leitung 14 ein Verschieben der Kolben 15, 16 nach rechts und damit ein Öffnen des Ringspaltes an der Stelle 21 und hiermit die Freigabe der Rücklaufleitung 7, 20, 9 des Motoröls. Dies ist der Normalbetrieb.

Das erläuterte Auf- und Absteigen des Tastrades 6 hat entsprechende Schwankungen des Aufsteuerdruckes in der Leitung 14 zur Folge. Ist dieser Druck und damit der Druck in der Zuleitung 4 zu hoch, so bewirkt dies eine entsprechende Erweiterung des Durchflusses 20, 21 im Dämpfungsventil 8 und damit einen schnelleren Abfluß des Antriebsöls des Motors 5. Ist der Druck in der Zuleitung 4 jedoch zu gering oder sogar gegen Null gehend, so hat dies eine entsprechende Verringerung des Aufsteuerdruckes der Leitung 14 und damit ein Verkleinern des Durchtrittsquerschnittes 21 oder sogar ein Schließen des Hydrauliköldurchtrittes an dieser Stelle zur Folge. Es kann weniger oder gar kein Öl vom Motor zurückfließen. In beiden vorgenannten Möglichkeiten des Pulsierens erfolgt also ein Ausgleich oder Dämpfung dieses Pulsierens, so daß insgesamt Zulauf und Rücklauf an Hydrauliköl zum bzw. vom Motor 5 im wesentlichen konstant bleibt.

Erwähnt sei, daß zusätzlich zu dem Aufsteuerdruck, d.h. zur Unterstützung des Öffnungsdruckes von der Leitung 14 auf den Steuerkolben 15 das abfließende Öl auf eine Ringfläche 22 des Kolbens 16 in Richtung nach rechts (gemäß Fig. 3) drückt, und in der Schließstellung auch auf die Ringfläche 23 dieses Kolbens nach links (gemäß Fig. 3) drückt. Die Ringfläche 22 ist größer als die Ringfläche 23. Damit ergibt sich stets eine resultierende Druckkraft nach rechts, d.h. im Öffnungssinn des Dämpfungsventiles. Sobald der Ringspalt 21 geöffnet ist, kommt noch eine Andruckkraft des Öles auf die Fläche 24 des Regulierungskolbens 16 und damit gemäß Fig. 3 in Richtung nach rechts, d.h. im Öffnungssinn des Ventiles hinzu. Durch Bemessung der jeweiligen Druckflächen der vorgenannten Steuerflächen und auch der Druckfläche des Steuerkolbens 15 einerseits und der Gegenkraft der Feder 17 andererseits kann das Dämpfungsventil 8 den Drücken und Druckverhältnissen beim Rodebetrieb in den Leitungen 4, 7, 9 entsprechend angepaßt werden.

## Patentansprüche

1. Ein- oder mehrreihiger Rübenroder, wobei in jeder Reihe ein die Rüben abtastendes, auf- und abschwingendes Tastrad (6) vorgesehen ist, das einen hydraulisch betätigten Antriebsmotor (5) aufweist und von diesem mit einer solchen Geschwindigkeit angetrieben wird, daß es relativ zum Erdboden schneller als der Roder läuft, wobei eine vom Rübenroder mechanisch angetriebene hydrostatische Lenkeinheit (3) am Roder vorgesehen und über das raulikmittel führende Zulaufund Rücklaufleitungen (4, 7, 9) mit dem Antriebsmotor (5) verbunen ist, dadurch gekennzeichnet, daß in die Rücklaufleitungen (7, 9) vom Antriebsmotor (5) des Tastrades (6) zur hydrostatischen Lenkeinheit (3) ein hydraulisches Dämpfungsventil (8) für eine Egalisierung des Öldruckes sowohl in dieser Rücklaufleitung (7, 9) als auch in der Zulaufleitung (4) von der hydrostatischen Lenkeinheit (3) zum Antriebsmotor (5) eingebaut ist.

2. Rübenroder nach Anspruch 1, dadurch gekennzeichnet, daß die Durchflußöffnung des Dämpfungsventiles (8) für den Ölrücklauf durch den Druck des Hydrauliköles in einer Abzweigleitung (14) eingestellt wird, die mit dem Aufsteuerdruck der Zulaufleitung (4) beaufschlagt ist.

3. Rübenroder nach Anspruch 1 oder 2, dadurch gekennzeichnet, daß das hydraulisches Dämpfungsventil (8) einen in die Rücklaufleitung (7, 9) hineinragenden, verschiebbaren Regulierungskolben (16) aufweist, daß am Dämpfungsventil (8) ferner ein unter dem Aufsteuerdruck der Zulaufleitung (4) stehender Steuerkolben (15) vorgesehen ist und daß der Steuerkolben entsprechend seiner Stellung über eine mechanische Verbindung den Regulierungskolben (16) relativ zu einem Rücklaufleitungsweg (20) des Ventiles (8), diesen Rücklaufleitungsweg mehr oder weniger öffnend, verschiebt.

4. Rübenroder nach Anspruch 3, dadurch gekennzeichnet, daß eine im Schließsinn des Dämpfungsventiles (8) wirkende, auf den Regulierungskolben (16) drückende Feder (17) vorgesehen und in ihrer Stärke einstellbar ist.

5. Rübenroder nach einem der Ansprüche 1 bis 4, dadurch gekennzeichnet, daß das Dämpfungsventil (8) entweder direkt auf den Antriebsmotor (5) aufgeflanscht oder in Motornähe vorgesehen ist.

6. Rübenroder nach einem der Ansprüche 3 bis 5, dadurch gekennzeichnet, daß am Regulierungskolben (16) Steuerflächen (22, 23, 24) vorgesehen sind, die unter dem Druck des in der Leitung (7) rücklaufenden Öles stehen, wobei diese Flächen so bemessen sind, daß der Öldruck im Öffnungssinn größer ist als der Öldruck im Schließsinn.

## Claims

1. Single-row or multi-row beet lifter, wherein a feeler wheel (6), which swings up and down and scans the beet and which displays an hydraulically actuated drive motor (5) and is driven by this at such a speed that it runs faster relative to the ground than the lifter, is provided in each row, wherein an hydrostatic steering unit (3), which is driven mechanically by the beet lifter, is provided at the lifter and connected with the drive motor (5) by way of feed duct (4) and return ducts (7, 9) carrying the hydraulic medium, characterised thereby, that built into the return ducts (7, 9) from the drive motor (5) of the feeler wheel (6) to the hydrostatic steering unit (3), there is an hydraulic damping valve (8) for an equalisation of the oil pressure in this return duct (7, 9) as well as also in the feed duct (4) from the hydrostatic steering unit (3) to the drive motor (5).

2. Beet lifter according to claim 1, characterised thereby, that the throughflow opening of the damping valve (8) for the oil return is set by the pressure of the hydraulic oil in a branch duct (14), which is loaded by the opening control pressure of the feed duct (4).

3. Beet lifter according to claim 1 or 2, characterised thereby, that the hydraulic damping valve (8) displays a displaceable regulating piston (16) projecting into the return duct (7, 9), that a control piston (15) standing under the opening control pressure of the feed duct (4) is furthermore provided at the damping valve (8) and that the control piston in accordance with its setting and by way of a mechanical connection displaces the regulating piston (16) relative to a return duct path (20) of the valve (8) while opening this return duct path more or less.

4. Beet lifter according to claim 3, characterised thereby, that a spring (17) is provided, which is settable in its strength, presses on the regulating piston (16) and which acts in the closing sense of the dumping valve (8).

5. Beet lifter according to one of the claims 1 to 4, characterised thereby, that the damping valve (8) is either flanged directly onto the drive motor (5) or provided in proximity of the motor.

6. Beet lifter according to one of the claims 3 to 5, characterised thereby, that control surfaces (22, 23, 24), which stand under the pressure of the oil returning in the duct (7), are provided at the regulating piston (16), wherein these surfaces are so dimensioned that the oil pressure in the opening sense is greater than the oil pressure in the closing sense.

## Revendications

1. Arracheuse de betteraves à une ou plusieurs rangées, comprenant dans chaque rangée un tâteur rotatif oscillatoire (6) qui tête les betteraves, qui comporte un moteur d'entraînement (5) à actionnement hydraulique, et qui est entraîné par lui a une vitesse telle qu'il se déplace par rapport au sol plus vite que l'arracheuse de betteraves, une unité de direction hydrostatique (3) entraînée mécaniquement par l'arracheuse de betteraves étant prévue sur l'arracheuse et reliée au moteur d'entraînement (5) par des conduites d'amenée et de retour (4, 7, 9) conduisant l'agent hydraulique, caractérisée par le fait qu'un clapet d'amortissement hydraulique (8) est monté dans les conduites de retour (7, 9) allant du moteur d'entraînement (5) du tâteur rotatif (6) à l'unité de direction hydrostatique (3), pour une égalisation de la pression d'huile aussi bien dans cette conduite de retour (7, 9) que dans la conduite d'amenée (4) allant de l'unité de direction hydrostatique (3) au moteur d'entraînement (5).

2. Arracheuse de betteraves selon la revendication 1, caractérisée par le fait que l'orifice de passage du clapet d'amortissement (8) pour le retour de l'huile est réglée par la pression de l'huile hydraulique dans une conduite de dérivation (14) qui est soumise à la pression de commande de la conduite d'amenée (4).

3. Arracheuse de betteraves selon la revendication 1 ou 2, caractérisée par le fait que le clapet d'amortissement hydraulique (8) comporte un piston de régularisation déplaçable (16) faisant saillie dans la conduite de retour (7, 9), qu'un piston de commande (15) soumis à la pression de commande de la conduite d'amenée (4) est en outre prévu sur le clapet d'amortissement (8), et que le piston de commande, en fonction de sa position, déplace le piston de régulation (16), par l'intermédiaire d'une liaison mécanique, par rapport à un trajet (20) de la conduite de retour du clapet (8), en ouvrant plus ou moins ce trajet de la conduite de retour.

4. Arracheuse de betteraves selon la revendication 3, caractérisée par le fait qu'elle comprend un ressort (17) qui agit dans le sens de la fermeture du clapet d'amortissement (8), qui appuie sur le piston de régulation (16) et dont la force est réglable.

5. Arracheuse de betteraves selon l'une des revendications 1 à 4, caractérisée par le fait que le clapet d'amortissement (8) est monté, soit directement sur le moteur d'entraînement (5) par des brides, soit dans le voisinage du moteur.

6. Arracheuse de betteraves selon l'une des revendications 3 à 5, caractérisée par le fait que le piston de régulation (16) comprend des surfaces de commande (22, 23, 24) qui sont soumises à la pression de l'huile refluant dans la conduite (7), ces surfaces étant dimensionnées de telle manière que la pression d'huile dans le sens de l'ouverture soit plus élevée que la pression d'huile dans le sens de la fermeture.

**Fig.1**

**Fig.2**

Fig.3